# EUROPÄISCHE PATENTSCHRIFT

(11) **EP 1 257 459 B1**
(45) Veröffentlichungstag und Bekanntmachung des Hinweises auf die Patenterteilung: **28.12.2005**
(21) Anmeldenummer: 01909719.5
(22) Anmeldetag: 01.02.2001
(51) Int. Cl.: B62D 21/11, B62D 21/15, B62D 29/00

(54) **HILFSRAHMEN EINES KRAFTFAHRZEUGFAHRWERKS**
AUXILIARY FRAME FOR A MOTOR VEHICLE
CADRE AUXILIAIRE POUR CHASSIS DE VEHICULE

(30) Priorität: 12.02.2000 DE 10006388
(43) Veröffentlichungstag der Anmeldung: 20.11.2002
(73) Patentinhaber: Volkswagen Aktiengesellschaft, 38436 Wolfsburg (DE)
(72) Erfinder: ORTIZ, Sergio, 38102 Braunschweig (DE); GRISCHOW, Axel, 28199 Bremen (DE)
(86) Internationale Anmeldenummer: PCT/EP2001/001076
(87) Internationale Veröffentlichungsnummer: WO 2001/058739

(56) Entgegenhaltungen:
- WO-A-97/09134
- WO-A-99/50127
- DE-A- 3 932 121
- GB-A- 2 067 478
- US-A- 3 547 463
- US-A- 5 882 039

## Beschreibung

Die Erfindung betrifft einen Rahmen eines Kraftfahrzeugfahrwerks, insbesondere einen Hilfsrahmen, welcher im wesentlichen als Hohlprofil ausgebildet ist, vorzugsweise aus einem innenhochdruckgeformten Rohrmaterial oder aus einer Mehrschalenschweißkonstruktion aus Stahl, wobei das Hohlprofil Deformations- und Trägerbereiche sowie Versteifungsmittel aufweist. Die Erfindung betrifft außerdem ein Verfahren zur Herstellung eines solchen Rahmens.

Deformationsbereiche sind Stellen am Rahmen, beziehungsweise am Hilfsrahmen einer Fahrwerkskonstruktion, welche sich bereits bei geringer Einwirkung von Crashenergie, im Gegensatz zu den Trägerbereichen, vorzugsweise durch Einknicken verformen. Dies ist im wesentlichen durch die Geometrie des Hilfsrahmens bedingt. So sind beispielsweise der Freigang für die Gelenkwelle an Fahrzeugen der B-, C- und D-Klasse sowie der Freigang für das Motorgetriebe bei Fahrzeugen mit bis zum Vorderbau verlängerten Hilfsrahmen typische Deformationsbereiche. Trägerbereiche sind die im wesentlichen geraden und mit weitgehend konstanter Materialstärke versehenen Bereiche der Fahrwerkskonstruktion beziehungsweise des Hilfsrahmens, welche im Falle eines Aufpralls Crashenergie an nachgeordnete Fahrwerksteile leiten, bevor sie sich verformen. Die Versteifungsmittel sind Verstärkungen dieser Bereiche, welche im Inneren eines als Hohlprofils ausgebildeten Rahmens oder Hilfsrahmens oder außerhalb um die Bauteile herum angeordnet sind.

Die gattungsgemäße DE 195 46 352 A1 offenbart eine vordere Fahrwerkskonstruktion eines Fahrzeugs mit Längsträgern und Querträgern und einer vorderen Stoßstange, die einen vordersten Teil der vorderen Rahmenkonstruktion überdeckt. Um im Falle eines Frontalzusammenstoßes einen Aufprall aufzunehmen, weist die Rahmenkonstruktion einen zwischen der vorderen Stoßstange und dem Längsträger an dessen Vorderende eingesetzten vorderen Querträger auf. Die Längsträger sind mit Aluminiumschaum ausgefüllt. Desweiteren weist die Fahrwerkskonstruktion mit dem Vorderende der Längsträger verbundene Stoßdämpferrahmen auf, welche mit Querträgern verbunden sind und mit Aluminiumschaum ausfüllt sind.

Die EP-844167 A2 offenbart eine Karroseriekonstruktion mit Trägem. Durch die Anordnung eines Strukturbauteils im Innem eines Trägers und die Ausschäumung des Zwischenraumes zwischen dem Strukturbauteil und dem Träger wird ein Bauteil gebildet, welches als Rahmen- oder Versteifungselement in Kraftfahrzeugen einsetzbar ist. Beispielsweise wird das Bauteil als Windschutzscheibenrahmen oder Überrollbügel, insbesondere jedoch als tragendes Teil des Fahrwerks, etwa als Seitenschweller eingesetzt. Solche innen liegenden Strukturbauteile sind vorzugsweise über stegartige Anformungen gegenüber dem äußeren Trägerteils abgestützt. Die Ausschäumung des Zwischenraumes ermöglicht eine flächige Abstützung des innen liegenden Strukturbauteils, so dass über den gesamten Verlauf des Trägers eine gleichmäßige Verstärkung der Festigkeit und Steifigkeit gegen von außen einwirkende Crashenergie, wie sie bei einem Unfall auftreten, erreichbar ist.

In der DE 195 01 508 C1 wird eine Verstärkung eines Bauteils für ein Fahrwerk eines Kraftfahrzeugs offenbart. Diese ist als Kern für den Aluminiumdruckguss des Bauteils ausgestaltet und besteht aus Aluminiumschaum. Dieser Kern füllt herstellungsbedingt den gesamten Innenhohlraum des Bauteils aus und dient der gleichmäßigen Verstärkung dieses Bauteils.

Nachteil dieser Ausgestaltungen ist, dass die vorgesehen Verstärkungen durch Ausschäumen der Teile der Fahrwerkskonstruktion die Festigkeit und Steifigkeit gleichmäßig erhöhen. Dadurch wird das Fahrzeug im Falle eines Crashs zunächst durch die Crashenergie starr gebremst, so dass die Bewegungsenergie der im Fahrgastraum befindlichen Personen unmittelbar auf diese einwirkt. Erst wenn die Deformationsbereiche der Fahrwerkskonstruktion verformt werden, also wenn die Verstärkungen der Crashenergie nicht standhalten, wird Crashenergie in Deformationsenergie umgewandelt. Das Verformen erfolgt dabei sehr schnell, vorzugsweise durch Knicken der Deformationsbereiche, da die Trägerbereiche höhere Festigkeit und Steifigkeit aufweisen.

Das der Erfindung zugrundeliegende technische Problem ist dabei dasselbe wie bei einer Fahrwerkskonstruktionen ohne derartige Verstärkungen, nämlich einen Rahmen zur Verfügung zu stellen, welcher die Crashenergie stetig aufnimmt und in Deformationsenergie umwandelt. Insbesondere liegt der Erfindung das Problem zugrunde einen Hilfsrahmen zur Verfügung zu stellen, der eine gleichmäßige Deformation von Deformations- und Trägerbereichen zulässt. Desweiteren ist erfindungsgemäßes Problem, die Fahrwerkskonstruktion so auszugestalten, dass ein besserer Fahrkomfort möglich ist insbesondere die Geräuschentwicklung beim Fahren zu senken.

Eine Lösung dieses Problems wird dadurch bereitgestellt, dass die Versteifungsmittel den Deformationsbereichen zugeordnet sind und eine vorbestimmte Festigkeit und/oder Steifigkeit zur Ableitung von Crashenergie in die Trägerbereiche aufweisen und dass Deformationsenergie in den Deformations- und Trägerbereichen gleichmäßig aufnehmbar ist. Vorteil dieser Ausgestaltung ist, dass die Crashenergie zunächst bis zu einer bestimmten Höhe von den Deformationsbereichen aufgenommen und an die Trägerbereiche weitergeleitet wird, ohne dass sich die Deformationsbereiche verformen. Die Crashenergie wird durch die Versteifungsmittel von den Trägerbereichen an nachgeordnete Fahrwerks- und/oder Karosseriebauteilen abgeleitet, welche die Crashenergie in Deformationsenergie umwandeln. Wird ein vorbestimmter Wert der Crashenergie überschritten, beginnt die Verformung der Deformationsbereiche und es wird Crashenergie in Deformationsenergie umgewandelt. Erfindungsgemäß ist dabei vorgesehen, dass die Crashenergie gleichmäßig von den Deformations- und Trägerbereichen aufnehmbar ist. Dabei beginnt die Umwandlung von Crashenergie in Deformationsenergie in den Deformations- und Trägerbereichen gleichmäßig und wird stetig weitergeführt. Durch diese Ausgestaltung des Rahmens beziehungsweise Hilfsrahmens ist es möglich die Crashenergie gezielt in die Rahmenstruktur einzuleiten und durch die Einbeziehung sowohl der Deformations- als auch der Trägerbereiche höhere Crashenergie insgesamt aufzunehmen und umzuwandeln. Es wird damit erreicht, dass zu Beginn des Crashs Crashenergie in erheblichen Maß durch die Deformation umgewandelt wird und die Rahmenstruktur sich gegen Ende des Crashs zunehmend steif verhält. Es wird ein frühes Versagen der Deformationsbereich, insbesondere das Einknicken an bestimmten Stellen des Rahmens verhindert, so dass ein unstetiges Verhalten bei der Umwandlung der Bewegungsenergie in Deformationsenergie vermieden wird und die Personen im Fahrgastraum im wesentlichen einer gleichmäßigen Belastungssteigerung ausgesetzt sind, wodurch die Verletzungsgefahr verringert wird.

Desweiteren werden mit der erfindungsgemäßen Ausgestaltung Gewichtseinsparungen möglich, da die Versteifungsmittel an die Festigkeit und/oder Steifigkeit der Rahmenstruktur insbesondere der Deformationsbereiche angepasst werden kann. Deformationsbereiche mit höherer Festigkeit und/oder Steifigkeit benötigen weniger starke Aussteifungen, so dass die vorgesehenen Versteifungsmittel entsprechend angepasst sein können. Erfindungsgemäß ist dazu vorgesehen, dass die Versteifungsmittel die Deformationsbereiche und/oder die Trägerbereiche des Hohlprofils partiell aussteifen.

Eine Ausgestaltung der Erfindung wird dadurch bereitgestellt, dass jeder Deformationsbereich an seine Festigkeit und Steifigkeit angepasste Versteifungsmittel aufweisen, so dass die Verformung von Deformations- und Trägerbereichen im wesentlichen gleichzeitig erfolgt.. Vorteil dieser Ausgestaltung ist, dass kein Bereich durch größere Deformation zerstört wird und die gleichmäßige Umwandlung von Crashenergie damit beendet würde. Es kann somit in vorteilhafter Weise erreicht werden, dass insbesondere der Hilfsrahmen während der Verformung stets eine größtmögliche Rahmenfläche aufweist. Hierdurch wird gewährleistet, dass die Deformation des Fußraums minimiert wird und der Fahrgastraum während des Crashs den größtmöglichen Sicherheitsraum bietet.

Eine Ausgestaltung der Erfindung wird dadurch bereitgestellt, dass die Versteifungsmittel ein vorbestimmtes Verformungsverhalten der Deformations-und/oder Trägerbereiche erzeugen. Dies kann durch das Material beziehungsweise die Struktur der Versteifungsmittel erreicht werden. Vorteilhaft an dieser Ausgestaltung ist, dass damit die Verformung des Rahmens beziehungsweise Hilfsrahmens konstruktiv berücksichtigt werden kann. Es ist möglich Bauteile oder Bauteilgruppen in einer Weise dabei einzubeziehen, dass das vorbestimmten Verformungsverhalten des Hilfsrahmens mit deren Anordnung korrespondiert, so dass unerwünschte Einwirkungen auf den Fahrgastraum weitgehend ausgeschlossen werden können.

Eine bevorzugte Ausgestaltung der Erfindung wird dadurch bereitgestellt, dass die Versteifungsmittel eine Schaummasse, vorzugsweise auf der Basis von Metall-, Kohlenstoff oder Kunststoffschaum, umfassen, welcher im Hohlprofil aufschäumbar ist und dass die Schaummasse eine den Festigkeits oder Steifigkeitsvorgaben entsprechende Porosität und/oder Materialdichte aufweist. Die Schaummasse wird mit bekannten Mitteln hergestellt, indem auf ein Pulver oder ein Anstrich aus Metall, Kohlenstoff oder Kunststoff mit einem entsprechenden Aufschäummittel Energie einwirkt. Vorzugsweise wird die Grundmasse erhitzt, bis das Material aufschäumt. Dies kann durch eine externe Strahlungsquelle erreicht werden. Mit dieser Methode ist es möglich die Schaummasse partiell oder mit Struktur mit einfachen Mitteln im Hohlprofil einzutragen. Je nach Festigkeits- und Stetigkeitsverhalten der Fahrwerkskonstruktion kann die Grundmasse ausgewählt werden. Es ist dabei vorgesehen, für jede Ausführungsform von Fahrwerkskonstruktion eine bestimmte, den Erfordernissen der Konstruktion angepasste Schaummasse zu verwenden. Von der Erfindung ebenfalls umfasst sind Ausgestaltungen mit verschiedenen Schaummassen in einer Rahmenkonstruktion. Es sind dabei unterschiedliche Materialien, insbesondere Metalle oder Legierungen für die Schaummasse vorgesehen. Insbesondere Aluminium, Zink oder Legierungen, vorzugsweise aus diesen Metallen, werden als Grundsubstanz für die Schaummasse eingesetzt. Erfindungsgemäß wird die Schaummasse in dem Hohlprofil so eingetragen, dass sie in den Deformationsbereichen eine höhere Materialdichte aufweist als in den Trägerbereichen. In vorteilhafter Weise kann eine Schaummasse verwendet werden, welche die Eigenfrequenz des Hilfsrahmens erhöht. Dies senkt die Geräuschentwicklung beim Fahren und erhöht den Fahrkomfort.

In vorteilhafter Weise wird die Versteifung entsprechend der vorgesehenen Festigkeit und Steifigkeit und/oder Eigenfrequenz des Hilfsrahmens im Hohlprofil angeordnet und/oder portioniert. Desweiteren wird die Schaummasse entsprechend der vorgesehenen Festigkeit, Steifigkeit und/oder Eigenfrequenz des Hilfsrahmens im Hohlprofil mit vorbestimmter Materialdichte und/oder Porosität ausgeschäumt.

Die Erfindung wird im Folgenden anhand der Zeichnung erläutert. Es zeigen
- Figur 1: einen Hilfsrahmen eines Kraftfahrzeugfahrwerks mit erfindungsgemäßen Versteifungsmitteln in perspektivischer Ansicht;
- Figur 2: den Hilfsrahmen mit Versteifungsmitteln in Querschnittansicht.

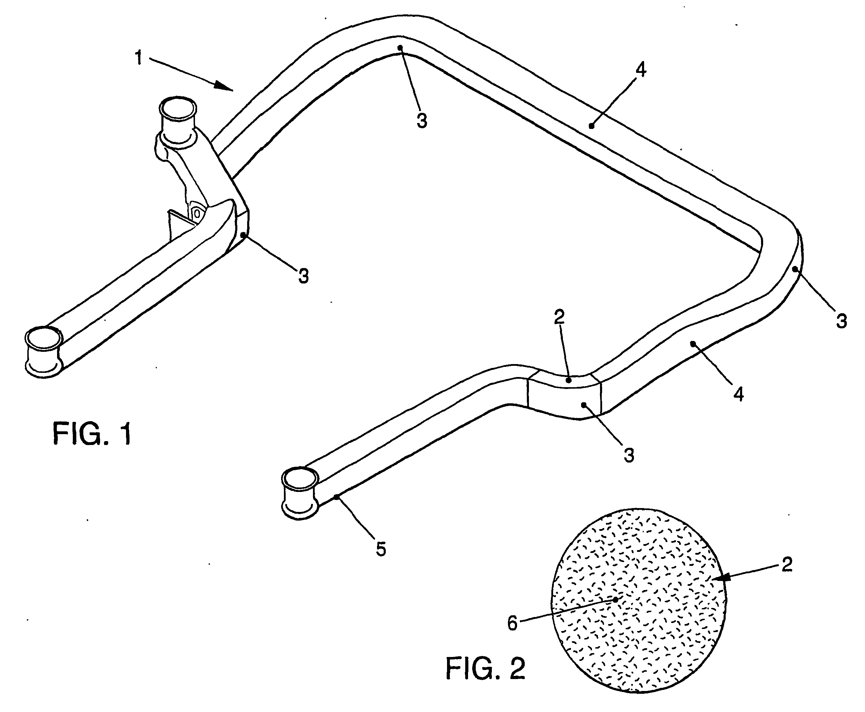

In Figur 1 ist ein Hilfsrahmen 1 eines Kraftfahrzeugfahrwerks mit erfindungsgemäßen Versteifungsmitteln 2 in perspektivischer Ansicht dargestellt. Der Hilfsrahmen 1 weist Deformationsbereiche 3 auf, welche sich bereits bei geringer Einwirkung von Crashenergie vorzugsweise durch Einknicken verformen. Diese sind im wesentlichen die abgewinkelten Bereiche des Hilfsrahmens 1, welche durch die Gestaltungserfordernisse hinsichtlich der angrenzenden Bauteile, wie beispielsweise Karosseriebauteile, Radaufhängung und Motorgetriebeblock, bedingt sind. So sind beispielsweise der Freigang für die Gelenkwelle oder für das Motorgetriebe typische Deformationsbereiche. Desweiteren weist der Hilfsrahmen Trägerbereiche 4 auf, welche im wesentlichen gerade Profilformen aufweisen und mit weitgehend konstanter Materialstärke ausgestaltet sind. Die Trägerbereiche 4 der Fahrwerkskonstruktion beziehungsweise des Hilfsrahmens 1 leiten Crashenergie an nachgeordnete Fahrwerksteile ab, bevor sie sich verformen. Die nachgeordneten Fahrwerksteile sind in der Zeichnung nicht dargestellt.

Die Versteifungsmittel 2 sind den Deformationsbereichen 3 zugeordnet und im vorliegenden Beispiel unmittelbar im Hohlprofil 5 an den Deformationsbereichen 3 eingetragen. Dabei handelt es sich um eine Schaummasse 6, welche erfindungsgemäß Metall, Kunststoff oder Kohlenstoff als Grundsubstanz aufweisen kann. Die Schaummasse 6 ist so angeordnet, dass Crashenergie im Falle eines Aufpralls in die Trägerbereiche 4 abgeleitet wird. Durch Auswahl der Materialien für die Versteifungsmittel 2 und eine vorbestimmte Ausgestaltung der Struktur der Versteifungsmittel 2, beispielsweise durch die Anordnung im Hilfsrahmen 1, die Menge, die Materialdichte oder die Porosität ist es erfindungsgemäß möglich die Versteifungsmittel 2 an die unterschiedlichen Bedingungen und geometrischen Vorgaben der unterschiedlichen Fahrzeugtypen anzupassen. In der Zeichnung ist der ausgeschäumte Bereich lediglich an einer Stelle des Rahmens gezeigt. Erfindungsgemäß ist vorgesehen, jeden Deformationsbereich 3 mit dem Versteifungsmittel 2 zu versehen.

In Figur 2 ist eine Querschnittansicht eines Hilfsrahmens 1 mit Versteifungsmittel 2 dargestellt. Die Versteifungsmittel 2 sind dabei eine Schaummasse 6 mit im wesentlichen gleichmäßiger Porosität und Materialdichte. Es ist möglich in Längsrichtung als auch radial im Hohlprofil 5 die Materialdichte beziehungsweise die Porosität zu variieren, was in der Zeichnung nicht dargestellt ist. Erfindungsgemäß ist auch vorgesehen, ein Querschnittsegment in Längsrichtung des Hohlprofils vom Material des Versteifungsmittels 2 vollständig auszusparen, so dass das Versteifungsmittel 2 an dieser Stelle das Hohlprofil 5 nur teilweise ausfüllt. Entsprechend kann auch eine Porositätsveränderung vorgesehen sein, welche mit einer Veränderung der Materialdichte korrespondiert, so dass in Teilbereichen des Hohlprofils 5 hohe Materialdichte und/oder Porosität vorherrscht und in anderen Teilbereichen geringere. Die Ausgestaltungen und Strukturen lassen sich durch definierte Energiezufuhr beim Aufschäumen des Substrates oder durch ein geeignetes Mischungsverhältnis des Schäumungsmittels im Substrat erreichen. Auf diese Weise ist es möglich ein bestimmtes Deformationsverhalten des Hilfsrahmen 1 beim Crash zu unterstützen. Desweiteren ist es damit möglich die Eigenfrequenz des Hilfsrahmens 1 zu erhöhen und damit die Geräuschentwicklung beim Fahren zu senken.

### BEZUGSZEICHENLISTE

- 1: Hilfsrahmen
- 2: Versteifungsmittel
- 3: Deformationsbereich
- 4: Trägerbereich
- 5: Hohlprofil
- 6: Schaummasse

## Patentansprüche

1. Rahmen eines Kraftfahrzeugfahrwerks, insbesondere ein Hilfsrahmen (1), welcher im wesentlichen als Hohlprofil (5) ausgebildet ist, vorzugsweise aus einem innenhochdruckgeformten Rohrmaterial oder aus einer Mehrschalenschweißkonstruktion aus Stahl, wobei das Hohlprofil (5) Deformations-und Trägerbereiche (3, 4) sowie Versteifungsmittel (2) aufweist, **dadurch gekennzeichnet, dass** die Versteifungsmittel (2) den Deformationsbereichen (3) zugeordnet sind und eine vorbestimmte Festigkeit und/oder Steifigkeit zur Ableitung von Crashenergie in die Trägerbereiche (4) aufweisen und dass Deformationsenergie in den Deformations- und Trägerbereichen (3, 4) gleichmäßig aufnehmbar ist.

2. Rahmen eines Kraftfahrzeugfahrwerks (1) nach Anspruch 1, **dadurch gekennzeichnet, dass** die Versteifungsmittel (2) die Deformations- und/oder Trägerbereiche (3, 4) des Hohlprofils (5) partiell aussteifen.

3. Rahmen eines Kraftfahrzeugfahrwerks (1) nach einem oder mehreren der Ansprüche 1 und 2, **dadurch gekennzeichnet, dass** jeder Deformationsbereich (3) an seine Festigkeit und Steifigkeit angepasste Versteifungsmittel (2) aufweisen, so dass die Verformung von Deformations- und Trägerbereichen (3, 4) im wesentlichen gleichzeitig erfolgt.

4. Rahmen eines Kraftfahrzeugfahrwerks (1) nach einem oder mehreren der Ansprüche 1 bis 3, **dadurch gekennzeichnet, dass** die Versteifungsmittel (3) ein vorbestimmtes Verformungsverhalten der Deformations- und/oder Trägerbereiche (3, 4) erzeugen.

5. Rahmen eines Kraftfahrzeugfahrwerks (1) nach einem oder mehreren der Ansprüche 1 bis 4, **dadurch gekennzeichnet, dass** die Versteifungsmittel (2) eine Schaummasse (6), vorzugsweise auf der Basis von Metall-, Kohlenstoff oder Kunststoffschaum, umfassen, welcher im Hohlprofil (5) aufschäumbar ist und dass die Schaummasse (6) eine den Festigkeits- oder Steifigkeitsvorgaben entsprechende Porosität und/oder Materialdichte aufweist.

6. Rahmen eines Kraftfahrzeugfahrwerks (1) nach Anspruch 5, **dadurch gekennzeichnet, dass** der Metallschaum Aluminium, Zink oder dergleichen Legierungen aufweist.

7. Rahmen eines Kraftfahrzeugfahrwerks(1) nach einem oder mehreren der Ansprüche 5 und 6, **dadurch gekennzeichnet, dass** die Schaummasse (6) in den Deformationsbereichen (3) eine höhere Materialdichte aufweist als in den Trägerbereichen (4).

8. Rahmen eines Kraftfahrzeugfahrwerks (1) nach einem oder mehreren der Ansprüche 5 bis 7, **dadurch gekennzeichnet, dass** die Schaummasse (6) die Eigenfrequenz des Hilfsrahmens (1) erhöht.

9. Verfahren zur Herstellung eines Rahmens eines Kraftfahrzeugfahhrmerks (1) nach einem oder mehreren der Ansprüche 1 bis 8, **dadurch gekennzeichnet, dass** die Versteifungsmittel (2) entsprechend der vorgesehenen Festigkeit und Steifigkeit und/oder Eigenfrequenz des Hilfsrahmens (1) im Hohlprofil (5) angeordnet und/oder portioniert wird.

10. Verfahren zur Herstellung eines Rahmens eines Kraftfahrzeugfahrwerks (1) nach Anspruch 9, **dadurch gekennzeichnet, dass** die Schaummasse (6) entsprechend der vorgesehenen Festigkeit, Steifigkeit und/oder Eigenfrequenz des Hilfsrahmens (1) im Hohlprofil (5) mit vorbestimmter Materialdichte und/oder Porosität ausgeschäumt wird.

## Claims

1. Frame for a motor vehicle chassis, in particular an auxiliary frame (1), which is designed essentially as a hollow profile (5), preferably of a tubing material formed by internal high pressure or of a multi-shell welding construction of steel, the hollow profile (5) having deformation and support regions (3, 4) and stiffening means (2), **characterized in that** the stiffening means (2) are assigned to the deformation regions (3) and have a predetermined strength and/or rigidity for diverting crash energy into the support regions (4), and **in that** the deformation energy can be absorbed uniformly in the deformation and support regions (3, 4).

2. Frame for a motor vehicle chassis (1) according to Claim 1, **characterized in that** the stiffening means (2) partially stiffen the deformation and/or support regions (3, 4) of the hollow profile (5).

3. Frame for a motor vehicle chassis (1) according to one or more of Claims 1 and 2, **characterized in that** each deformation region (3) has stiffening means (2) matched to its strength and rigidity, so that the deformation of deformation and support regions (3, 4) takes place essentially at the same time.

4. Frame for a motor vehicle chassis (1) according to one or more of Claims 1 to 3, **characterized in that** the stiffening means (3) produce a predetermined deformation behaviour of the deformation and/or support regions (3, 4).

5. Frame for a motor vehicle chassis (1) according to one or more of Claims 1 to 4, **characterized in that** the stiffening means (2) comprise a foam mass (6), preferably based on metal foam, carbon foam or plastic foam which can be foamed-up in the hollow profile (5), and **in that** the foam mass (6) has a porosity and/or material density corresponding to the strength or rigidity specifications.

6. Frame for a motor vehicle chassis (1) according to Claim 5, **characterized in that** the metal foam has aluminium, zinc or alloys of the same.

7. Frame for a motor vehicle chassis (1) according to one or more of Claims 5 and 6, **characterized in that** the foam mass (6) has a higher material density in the deformation regions (3) than in the support regions (4).

8. Frame for a motor vehicle chassis (1) according to one or more of Claims 5 to 7, **characterized in that** the foam mass (6) increases the natural frequency of the auxiliary frame (1).

9. Method for producing a frame for a motor vehicle chassis (1) according to one or more of Claims 1 to 8, **characterized in that** the stiffening means (2) are arranged and/or portioned in the hollow profile (5) in accordance with the designated strength and rigidity and/or natural frequency of the auxiliary frame (1).

10. Method for producing a frame for a motor vehicle chassis (1) according to Claim 9, **characterized in that** the foam mass (6) is foamed in the hollow profile (5) with a predetermined material density and/or porosity in accordance with the designated strength, rigidity and/or natural frequency of the auxiliary frame (1).

## Revendications

1. Cadre pour châssis de véhicule automobile, notamment un cadre auxiliaire (1) qui est réalisé essentiellement sous forme de profilé creux (5), de préférence en matériau brut moulé par formage interne sous haute pression ou en une construction soudée à plusieurs coquilles en acier, le profilé creux (5) présentant des zones de déformation et de support (3, 4) ainsi que des moyens de renforcement (2), **caractérisé en ce que** les moyens de renforcement (2) sont associés aux zones de déformation (3) et présentent une solidité et/ou une rigidité prédéterminées pour dévier l'énergie de collision dans les zones de support (4), et **en ce que** l'énergie de déformation peut être reçue uniformément dans les zones de déformation et de support (3, 4).

2. Cadre pour châssis de véhicule automobile (1) selon la revendication 1, **caractérisé en ce que** les moyens de renforcement (2) rigidifient partiellement les zones de déformation et/ou de support (3, 4) du profilé creux (5).

3. Cadre pour châssis de véhicule automobile (1) selon l'une quelconque ou plusieurs des revendications 1 et 2, **caractérisé en ce que** chaque zone de déformation (3) présente des moyens de renforcement (2) adaptés à sa solidité et sa rigidité, de sorte que la déformation des zones de déformation et de support (3, 4) s'effectue essentiellement simultanément.

4. Cadre pour châssis de véhicule automobile (1) selon l'une quelconque ou plusieurs des revendications 1 à 3, **caractérisé en ce que** les moyens de renforcement (3) produisent un comportement de déformation prédéterminé des zones de déformation et/ou de support (3, 4).

5. Cadre pour châssis de véhicule automobile (1) selon l'une quelconque ou plusieurs des revendications 1 à 4, **caractérisé en ce que** les moyens de renforcement (2) comprennent une composition de mousse (6), de préférence à base de mousse de métal, de carbone ou de plastique, qui peut être moussée dans le profilé creux (5) et **en ce que** la composition de mousse (6) présente une porosité et/ou une densité de matière correspondant aux données prédéfinies de solidité ou de rigidité.

6. Cadre pour châssis de véhicule automobile (1) selon la revendication 5, **caractérisé en ce que** la mousse de métal présente de l'aluminium, du zinc ou des alliages similaires.

7. Cadre pour châssis de véhicule automobile (1) selon l'une quelconque ou plusieurs des revendications 5 et 6, **caractérisé en ce que** la composition de mousse (6) présente dans les zones de déformation (3) une densité de matière plus importante que dans les zones de support (4).

8. Cadre pour châssis de véhicule automobile (1) selon l'une quelconque ou plusieurs des revendications 5 à 7, **caractérisé en ce que** la composition de mousse (6) augmente la fréquence propre du cadre auxiliaire (1).

9. Procédé de fabrication d'un cadre pour châssis de véhicule automobile (1) selon l'une quelconque ou plusieurs des revendications 1 à 8, **caractérisé en ce que** les moyens de renforcement (2) sont disposés et/ou préportionnés en fonction de la solidité et de la rigidité prévues et/ou de la fréquence propre du cadre auxiliaire (1) dans le profilé creux (5).

10. Procédé de fabrication d'un cadre pour châssis de véhicule automobile (1) selon la revendication 9, **caractérisé en ce que** la composition de mousse (6) est moussée avec une densité dé matière et/ou une porosité prédéterminées en fonction de la solidité, de la rigidité et/ou de la fréquence propre prévues du cadre auxiliaire (1) dans le profilé creux (5).
